# FASCICULE DE BREVET EUROPEEN

(11) **EP 1 551 555 B1**
(45) Date de publication et mention de la délivrance du brevet: **30.11.2011**
(21) Numéro de dépôt: 03761653.9
(22) Date de dépôt: 27.06.2003
(51) Int. Cl.: B04B 1/02, B04B 11/06, B01D 11/04, B04B 11/02

(54) **EXTRACTEUR CENTRIFUGE ANNULAIRE A ROTOR D'AGITATION NOYE**
RINGFÖRMIGER ZENTRIFUGALEXTRAKTOR MIT EINGEBETTETEM RÜHRROTOR
ANNULAR CENTRIFUGAL EXTRACTOR WITH EMBEDDED STIRRING ROTOR

(30) Priorité: 01.07.2002 FR 0208206
(43) Date de publication de la demande: 13.07.2005
(73) Titulaire: Commissariat à l'Énergie Atomique et aux Énergies Alternatives, 75015 Paris (FR)
(72) Inventeur: RIVALIER, Patrick, F-34130 Mauguio (FR); DUHAMET, Jean, F-30200 Bagnols sur Ceze (FR); GANDI, Florent, F-30330 Saint André d'Olerargues (FR)
(74) Mandataire: Poulin, Gérard
(86) Numéro de dépôt international: PCT/FR2003/001992
(87) Numéro de publication internationale: WO 2004/002631

(56) Documents cités:
- EP-A- 0 312 045
- FR-A- 2 576 525

## Description

Le sujet de cette invention est un extracteur centrifuge destiné à un procédé d'extraction à deux liquides.

Les procédés d'extraction liquide-liquide de composants de mélanges par centrifugation sont couramment utilisés depuis longtemps dans les industries chimiques, pharmaceutiques et nucléaires en particulier. Certains appareils utilisés pour accomplir ces procédés sont des extracteurs centrifuges annulaires dans lesquels les mélanges sont introduits dans un bol d'un rotor tournant à une extrémité et en ressortent à l'extrémité opposée. La séparation résulte d'une décantation dans laquelle la phase lourde du mélange est centrifugée à la périphérie du bol alors que la phase légère se rassemble plus près du centre de rotation.

Les extracteurs appliquant une extraction à deux liquides sont généralement à double entrée, c'est-à-dire que les phases liquides à mélanger et à séparer y entrent par des conduits généralement différents. Elles sont alors mélangées en une émulsion au moyen du rotor avant d'entrer dans le bol. Une de ces phases liquides est dite phase d'alimentation et comporte des solutés à extraire, et l'autre est dite solvant et capte préférentiellement certains des solutés. Le mélange des phases suivi de leur séparation fait passer ces solutés dans le solvant et les extraits donc de la phase d'alimentation. Le transfert des solutés peut également se faire dans le sens du solvant vers la phase aqueuse et est donc appelé désextraction.

On se réfère maintenant aux figures annexées :
- la figure 1 illustre un extracteur centrifuge annulaire connu,
- et la figure 2, un extracteur selon l'invention.

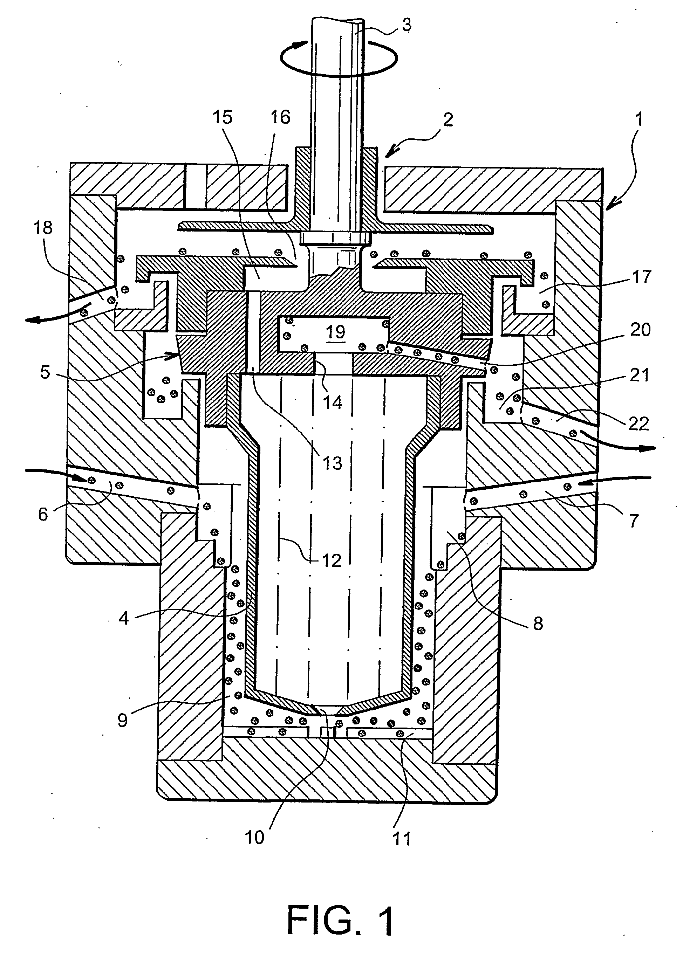

Un exemple d'extracteur annulaire connu est donné à la figure 1, où il comprend essentiellement un boîtier 1 et un rotor 2 tournant en lui. Le rotor 2 comprend un arbre moteur 3, un bol 4 et un bloc 5 reliant les deux précédents entre eux. Il tourne autour d'un axe vertical, le bol 4 étant placé en bas. Le boîtier 1 comprend deux canaux d'entrée 6 et 7 des phases, qui se déversent dans une chambre inférieure 8 contenant le bol, puis coulent dans un entre-deux 9 annulaire étroit entre le bol 4 et le boîtier 1 où elles sont mises en émulsion par les forces de cisaillement produites par la rotation du bol 4. En arrivant au fond du boîtier 1, elles coulent sous le bol 4. Des reliefs appelés contre-pales 11 sont installés au fond du boîtier 1 pour freiner la rotation de l'émulsion et la diriger vers un orifice 10 situé au centre du fond du bol 4.

Par effet de la force centrifuge, l'émulsion des phases se décante à l'intérieur du bol 4 après avoir franchi l'orifice 10, la phase lourde s'accumulant contre la paroi du bol 4 jusqu'à une interface 12 et la phase légère étant présente au-delà de cette interface 12 vers l'axe de rotation. Le mélange séparé coule vers le haut du bol 4 et en sort par un conduit 13 situé du côté de la phase lourde et par-dessus un premier déversoir 14 situé du côté de la phase légère. Le conduit 13 mène à une chambre intermédiaire de phase lourde 15, que la phase lourde quitte en passant par-dessus un second déversoir 16, et elle se déverse vers un anneau de recueil de phase lourde 17. La phase légère passe dans une chambre intermédiaire 19 puis dans un canal d'évacuation 20 qui l'amène à un anneau de recueil de phase légère 21.

Les anneaux de recueil 17 et 21 sont situés à la paroi périphérique du boîtier 1, l'un au-dessus de l'autre, alors que les éléments précédents étaient façonnés dans le bloc 5 solidaire du bol 4. Des conduits de sortie 18 et 22 débouchant dans les anneaux de recueil 17 et 21 acheminent les phases séparées vers l'extérieur.

Certains perfectionnements peuvent compliquer la structure de cet extracteur annulaire, mais on se heurte de toute façon à des difficultés de réglage correct de l'appareil, en raison de ce que l'agitation créant l'émulsion, la décantation créant la séparation ainsi que la capacité d'aspiration de l'émulsion dans le bol dépendent surtout de la rotation du bol 4, et qu'une vitesse de rotation conciliant un fonctionnement optimal de ces trois fonctions est souvent impossible à trouver. Le risque le plus important est une aspiration trop importante des phases en émulsion dans le bol, qui conduirait à un temps de contact très courant et par conséquent à une mauvaise efficacité de transfert, ou à une aspiration d'air. En réduisant la vitesse de rotation du rotor 3, on supprimerait ce risque, mais la décantation serait alors moindre.

Il est aussi difficile de choisir de bonnes dimensions pour les éléments de l'extracteur et en particulier le bol 4, dont le diamètre et la hauteur doivent être suffisants pour produire le cisaillement à l'émulsion, qui ne se développe qu'avec l'étroitesse de l'intervalle entre le boîtier 1 et le bol 4 et doit aussi s'exercer sur une longueur suffisante de coulée dans l'entre-deux 9. Il s'ensuit que le volume du bol 4 devient important et que s'accroît donc ce qu'on appelle le hold-up (l'inventaire) de l'extracteur, c'est-à-dire la quantité de liquide qui y est retenue et qu'on voudrait au contraire réduire puisqu'elle est temporairement soustraite à d'autres traitements dans le processus industriel et qu'elle complique la vidange de l'extracteur pendant un arrêt.

Il est aussi désavantageux que la rotation du liquide en émulsion doive être freinée par les contre-pales 11 pour le diriger vers l'orifice 10, avant qu'une remise en rotation ne soit faite dans le bol 4, faisant perdre de l'énergie. Enfin, on a parfois constaté que l'interface 12 n'était pas toujours au rayon attendu, ce qui rend le fonctionnement de l'extracteur incertain.

Tous ces facteurs expliquent certaines limites de fonctionnement, en particulier pour le débit de séparation, qu'on rencontre dans ce genre d'extracteurs.

Le document EP-A-0 312 045 décrit un extracteur centrifuge conforme au préambule de la première revendication.

L'invention comprend un extracteur centrifuge de deux phases fluides, comprenant un rotor central tournant autour d'un axe de rotation, et comprenant un bol, un stator, une chambre de décantation contenue dans le bol du rotor et une chambre d'émulsion contenue entre le rotor et le stator, les chambres d'émulsion et de décantation communiquant entre elles et la chambre d'émulsion étant placée sous la chambre de décantation, les chambres d'émulsion et de décantation étant alignées en succession sur l'axe de rotation du rotor, le rotor comprenant une pièce d'axe délimitant la chambre d'émulsion.

Les conséquences de cette disposition peuvent être présentées comme suit. Les dimensions de rayon des chambres d'émulsion et de décantations deviennent indépendantes, ce qui permet de les choisir au mieux- La chambre d'émulsion peut ainsi être construite avec une petit rayon pour y instaurer un écoulement de Couette-Poiseuille favorable à la régularité du procédé, alors que la chambre de décantation peut rester assez large avec un rayon plus grand que celui de la chambre d'émulsion, ce qui était exclu par la construction précédente, mais permet de maintenir des forces centrifuges supérieures.

Les hauteurs (ou longueurs) des deux chambres sont aussi indépendantes, ce qui permet d'avoir une chambre de décantation courte et dont le volume reste donc modéré, mais une chambre d'émulsion longue et étroite pour favoriser celle-ci, alors que la chambre de décantation était forcément plus longue que la chambre d'émulsion dans la conception connue.

Un aspect essentiel et original de l'invention est une construction modulaire, où le rotor et le stator sont composés de portions assemblées de façon séparable, le rotor comprenant une première portion comprenant une paroi périphérique de la chambre de décantation et une deuxième portion comprenant la pièce d'axe. Il devient alors possible de choisir les dimensions des chambres d'émulsion et de décantation et de les adapter à des conditions particulières du procédé d'extraction, si on dispose de jeux de pièces différentes pour composer le rotor et le stator.

Selon des agencements particuliers, la deuxième portion du rotor comprend un fond du bol assemblé à la première portion, et des rayons joignant le fond à la pièce d'axe ; ou le stator comprend deux portions superposées dont une est creusée d'une cavité délimitant une paroi extérieure de la chambre d'émulsion ; ou encore, le bol est une portion amovible de déversement d'une phase légère hors de la chambre de décantation.

Le mouvement d'écoulement est d'autant plus régulier entre la chambre d'émulsion et la chambre de décantation que leur alignement est accompagné d'un passage de l'une à l'autre sans contrarier la rotation du fluide par des contre-pales ou des moyens du même genre.

La chambre d'émulsion étroite laisse dégagé un volume important au bas de l'extracteur, que peuvent occuper des canaux d'introduction des phases s'étendant sensiblement verticalement à côté de la chambre d'émulsion et la joignant par leur fond. Ces canaux servent en fait de canaux de garde, c_{'}est-à-dire de réservoirs partiellement emplis des phases avant qu'elles ne passent dans la chambre d'émulsion. Il devient alors improbable d'aspirer de l'air dans la chambre d'émulsion, ce qui maintient le volume mis en émulsion constant et régularise le travail de l'extracteur aussi bien dans l'émulsion que dans la décantation.

Une autre disposition favorable est obtenue si la pièce d'axe du rotor présente un accroissement de rayon, à une portion s'étendant dans la chambre de décantation, en allant vers la chambre d'émulsion.

Une autre possibilité d'entrée d'air, cette fois vers l'aval de la chambre d'émulsion, est alors interdite pour peu que la pièce d'axe ait une périphérie plongeant dans le liquide de la chambre de décantation à l'endroit où elle est le plus large.

Un dernier perfectionnement digne d'être mentionné ici est réalisé si des chambres intermédiaires des phases, situées en aval de la chambre de décantation et limitées vers l'aval par des déversoirs annulaires, communiquent entre elles.

L'égalisation des pressions alors obtenue tend à réduire les incertitudes sur la position de l'interface.

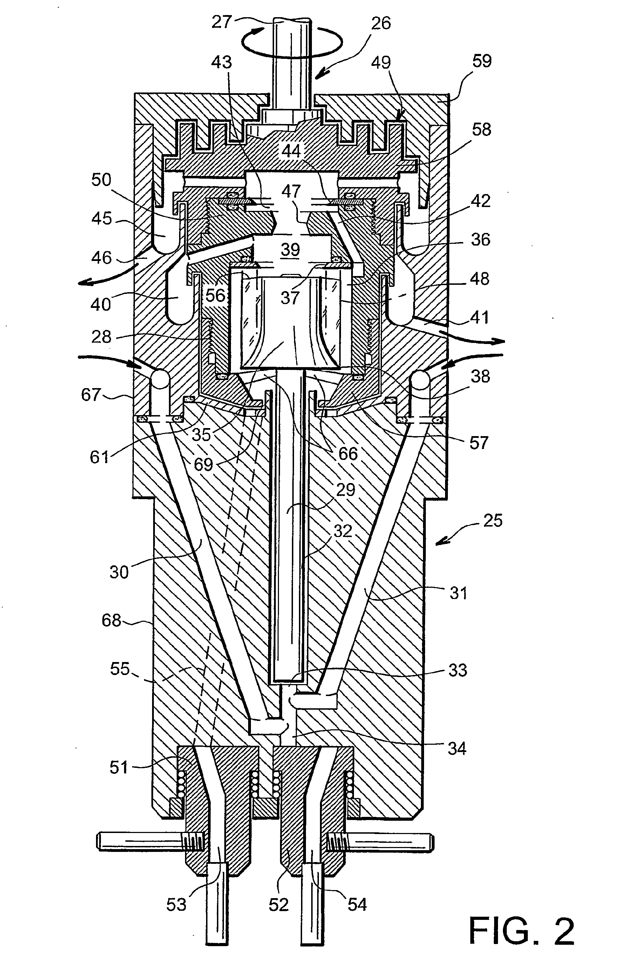

Tous ces perfectionnements ainsi que d'autres apparaîtront au commentaire de la figure 2, qui illustre une réalisation préférée de l'invention. Le boîtier (stator) porte ici la référence 25, le rotor la référence 26, et son axe tournant la référence 27. Le rotor 26 comprend encore un bol 28, s'étendant cette fois en haut du boîtier 25, et aussi une pièce d'axe 29 coaxiale à l'axe 27 et s'étendant sous le bol 28, presque jusqu'en bas du boîtier 25, et aussi à l'intérieur du bol 28. La chambre d'émulsion 32 est délimitée par la pièce d'axe 29 et la paroi (plus épaisse que dans la réalisation connue) du boîtier 25 ; elle se prolonge sur une certaine hauteur à l'intérieur du bol 28 par une lèvre 69 annulaire dépendant du boîtier 25 et qui contribue à délimiter la chambre d'émulsion 32 de façon à éviter que les liquides ne se trouvent dans l'entre-deux situé entre le bol 28 et le boîtier 25. Dans la partie inférieure dudit stator, se trouvent des pales 61 qui permettent de renvoyer les liquides présents dans l'entre-deux mentionné précédemment, par exemple dans le cas d'un démarrage de l'appareil en présence de liquide. La chambre d'émulsion 32 est alimentée par des canaux 30 et 31 d'entrée des deux phases, qui s'étendent sensiblement verticalement sur toute la hauteur de chambre d'émulsion 32 et la joignent par un canal de raccordement vertical 34 et un orifice inférieur 33. Les phases liquides emplissent une grande partie des canaux 30 et 31 en toute circonstance et ne sont mises en rotation qu'après avoir traversé l'orifice 33.

Le sommet de la pièce d'axe 29 est garni d'une portion amovible 35 en forme de manchon dont le rayon s'accroît vers le bas en formant un disque 38 restreignant la section de la chambre de décantation 36 qui s'étend autour de lui. Le volume liquide laissé à décanter est régi par le volume de la portion amovible 35 choisie et par un déversoir annulaire 37 dont le rayon intérieur est plus petit que celui de ce disque 38, de sorte que celui-ci est immergé et empêche l'air d'entrer dans la chambre d'émulsion 32 par l'aval, de même que le liquide emplissant les canaux 30 et 31 offrait la même protection à l'amont. La portion amovible 35 porte aussi des pales 56 d'entraînement du liquide dans la chambre de décantation 36.

Au-delà du déversoir 37 s'étend une chambre intermédiaire pour la phase légère 39, qui communique à un anneau de recueil de la phase légère 40 pouvant être disposé en hélice, c'est-à-dire que son fond est en dénivellation jusqu'à un canal de sortie 41 pour favoriser l'écoulement hors du séparateur. Un canal 42 creusé dans le bol permet à la phase lourde de sortir de la chambre de décantation 36 et de joindre une chambre intermédiaire pour phase lourde 43 et de la quitter par un second déversoir annulaire 44. La phase lourde rejoint alors un anneau de recueil 45, lui aussi pouvant être éventuellement en hélice ou en dénivellation, puis quitte le séparateur par un canal de sortie 46 débouchant au point le plus bas de l'anneau de recueil 45. Une communication 47 relie les chambres intermédiaires 39 et 43 et y égalise les pressions, ce qui réduit les paramètres d'incertitude sur la position de l'interface 48 dans la chambre de décantation 36. On remarquera que les déversoirs annulaires 37 et 44 sont tous deux des pièces amovibles, ce qui permet de les remplacer facilement par d'autres pour changer les conditions de réglage du séparateur. Pour cela, le bol 28 comprend un fond vissé 57 dont l'enlèvement permet de retirer la pièce d'axe 29 puis la portion amovible 35 du décanteur qui est fixée ou assemblée au fond vissé 57, et unie à lui par des rayons 66. De plus, le boîtier 25 comprend une portion supérieure 67 et une portion inférieure 68 qui sont superposées l'une sur l'autre avec un ajustement de centrage et des joints d'étanchéité. La portion inférieure 68 contient les canaux 30 et 31, et la chambre d'émulsion 32 y est creusée ; la portion supérieure 67 contient le bol 28.

Cette construction offre une modularité de l'extracteur qui constitue une avantage essentiel de l'invention : le rotor 26 peut être composé de pièces d'axe 29 et de bols 28 choisis parmi des jeux respectifs possédant des dimensions différentes, et de même le boîtier 29 peut être composé de portions inférieures 68 et supérieures 67 choisies parmi des jeux respectifs possédant des dimensions différentes, surtout pour les cavités de la chambre d'émulsion 32 et pour le bol 28.

Il résulte de cela que des dimensions de la chambre d'émulsion 32 et du bol 28 peuvent être choisies par l'utilisateur d'après le procédé à appliquer : de l'intensité souhaitée du cisaillement créateur de l'émulsion dépendra la largeur de la chambre d'émulsion 32 ; de l'intensité souhaitée la force centrifuge créatrice de la séparation des phases dépendra le rayon du bol 28 ; du volume d'inventaire souhaitable dépendra la hauteur du bol 28. Il ne sera pas nécessaire de chercher à modifier le procédé en changeant de vitesse de rotation du rotor 26. Une autre possibilité de réglage du volume du bol 28 qui contient les phases consiste à remplacer le déversoir 37 par un autre dont le bord intérieur a un rayon différent.

Le bol 28 comprend ainsi, outre le fond vissé 57, un corps 50 principal qui contient la paroi extérieure de la chambre de décantation 36 et détermine donc, seul avec la déversion 37, le volume des phases retenu dans le bol 28 ; et enfin, au sommet, un couvercle vissé 58 (porteur de l'axe 27) et qui permet de retirer le déversoir 44 dès qu'il a été dévissé. Le rotor 26 complet peut être retiré du boîtier 25 après avoir enlevé le couvercle 59 de celui-ci.

Un déflecteur 49 s'étend au sommet du corps 50 appartenant au rotor et qui contient les chambres intermédiaires.

Enfin, l'extracteur comprend une paire de tournants 51 et 52 en bas du boîtier 25, tous deux évidés de canaux d'évacuation 53 et 54 verticaux dont le premier peut s'aboucher à un canal de prélèvement 55 menant sous le bol 28, afin de procéder à des prélèvements de liquides mélangés, et dont le second s'abouche au bas du canal 34 pour vider l'extracteur.

Le débit de phase d'alimentation traité dans un prototype a été trois fois plus grand qu'avec les appareils connus (avec un taux d'extraction de solutés maintenu) pour un même hold-up total.

## Revendications

1. Extracteur centrifuge de deux phases fluides, comprenant un rotor central (26) tournant autour d'un axe de rotation (27) et comprenant un bol (28), un stator (25), une chambre de décantation (36) contenue dans le bol du rotor et une chambre d'émulsion (32), les chambres d'émulsion (32) et de décantation (36) communiquant entre elles et la chambre d'émulsion étant placée en amont de la chambre de décantation, les chambres d'émulsion et de décantation étant alignées en succession sur l'axe de rotation du rotor, le rotor comprenant une pièce d'axe (29) délimitant la chambre d'émulsion, **caractérisé en ce que** la chambre d'émulsion (32) est contenue entre le rotor et le stator, le stator (25) et le rotor (26) sont composés de portions assemblées de façon séparable, le rotor comprenant une première desdites portions séparables (50) comprenant une paroi périphérique de la chambre de décantation et une deuxième desdites portions séparables comprenant la pièce d'axe (29).

2. Extracteur selon la revendication 1, **caractérisé en ce que** la deuxième portion du rotor comprend un fond (57) du bol (28) assemblé à la première portion (50), et des rayons (66) joignant le fond (57) à la pièce d'axe (29).

3. Extracteur selon l'une quelconque des revendications 1 ou 2, **caractérisé en ce que** le stator (29) comprend deux portions superposées (67, 68) dont une est creusée d'une cavité pour le bol et une autre est creusée d'une cavité délimitant une paroi extérieure de la chambre d'émulsion (29).

4. Extracteur selon l'une quelconque des revendications 1 à 3, **caractérisé en ce que** la chambre de décantation a un plus grand rayon que la chambre d'émulsion.

5. Extracteur selon l'une quelconque des revendications 1 à 4, **caractérisé en ce que** la chambre d'émulsion communique à des canaux d'introduction et de garde des phases (30, 31) s'étendant sensiblement verticalement à côté de la chambre d'émulsion et menant par des extrémités inférieures à une extrémité inférieure de la chambre d'émulsion.

6. Extracteur selon l'une quelconque des revendications 1 à 5, **caractérisé en ce que** la pièce d'axe du rotor présente un accroissement de rayon, à une portion (38) s'étendant dans la chambre de décantation, en allant vers la chambre d'émulsion, ladite portion (38) ayant un plus grand rayon qu'un rayon d'ouverture d'une portion (37) du bol (28) par laquelle une phase fluide légère se déverse hors de la chambre de décantation (36).

7. Extracteur selon l'une quelconque des revendications 1 à 6, **caractérisé en ce que** des chambres intermédiaires des phases (39, 43), situées en aval de la chambre de décantation et limitées par des déversoirs annulaires (37, 44), communiquent entre elles.

8. Extracteur selon l'une quelconque des revendications 1 à 7, **caractérisé en ce que** la pièce d'axe s'étend dans la chambre de décantation et comprend des pales.

9. Extracteur selon l'une quelconque des revendications 1 à 8, **caractérisé en ce qu'**il comprend des anneaux (40, 45) de recueil des phases en aval de la chambre de décantation et qui ont un fond en pente vers des orifices de sortie du séparateur.

10. Extracteur selon l'une quelconque des revendications 1 à 9, **caractérisé en ce que** le bol (28) comprend une portion amovible (37) de déversement d'une phase légère hors de la chambre de décantation (36).

11. Extracteur selon l'une quelconque des revendications 1 à 10, **caractérisé en ce que** le stator (25) comprend une lèvre annulaire (69) contribuant à délimiter la chambre d'émulsion (32) et s'étendant dans le bol (28).

## Claims

1. A centrifugal extractor of two fluid phases, comprising a central rotor (26) rotating about an axis of rotation (27) and comprising a bowl (28), a stator (25), a setting chamber (36) in the bowl of the rotor and an emulsion chamber (32) between the rotor and the stator, the emulsion and settling chambers (32) communicating between them and the emulsion chamber being placed under the settling chamber, the emulsion and settling chambers being aligned in succession on the axis of rotation of the rotor, the rotor comprising a section of axis (29) delimiting the emulsion chamber, **characterised in that** the emulsion chamber is contained between the rotor and the stator, the stator (25) and the rotor (26) are composed of separably assembled portions, the rotor comprising a first of said separable portions (50) comprising a peripheral wall of the settling chamber and a second of said separable portions comprising the section of axis (29).

2. The extractor as claimed in Claim 1, **characterised in that** the second portion of the rotor comprises a base (57) of the bowl (28) attached to the first portion (50), and radii (66) joining the base (57) to the section of axis (29).

3. The extractor as claimed in any one of claims 1 or 2, **characterised in that** the stator (29) comprises two superposed portions (67, 68) whereof one is hollowed out of a cavity for the bowl and another is hollowed out from a cavity delimiting an external wall of the emulsion chamber (29).

4. The extractor as claimed in any one of Claims 1 to 3, **characterised in that** the settling chamber has a greater radius than the emulsion chamber.

5. The extractor as claimed in any one of Claims 1 to 4, **characterised in that** the emulsion chamber communicate with inlet and retention channels of the phases (30, 31) extending substantially vertically to the side of the emulsion chamber and leading via lower ends to a lower end of the emulsion chamber.

6. The extractor as claimed in any one of Claims 1 to 5, **characterised in that** the section of axis of the rotor has a radius increase, on a portion (38) extending into the settling chamber, going towards the emulsion chamber, said portion (38) having a greater radius than an opening radius of a portion (37) of the bowl (28), via which a light fluid phase discharges outside the settling chamber (36).

7. The extractor as claimed in any one of Claims 1 to 6, **characterised in that** intermediate chambers of phases (39, 43), located downstream of the settling chamber and limited by annular outlets (37, 44), communicate with one another.

8. The extractor as claimed in any one of Claims 1 to 7, **characterised in that** the section of axis extends into the settling chamber and comprises blades.

9. The extractor as claimed in any one of Claims 1 to 8, **characterised in that** it comprises gathering rings (44, 45) of the phases downstream of the settling chamber and which have a base inclined towards outlet orifices of the separator.

10. The extractor as claimed in any one of Claims 1 to 9, **characterised in that** the bowl (28) comprises a mobile discharge portion (37) of a light phase outside the settling chamber (36).

11. The extractor as claimed in any one of Claims 1 to 10, **characterised in that** the stator (25) comprises an annular lip (69) contributing to delimit the emulsion chamber (32) and extending into the bowl (28).

## Patentansprüche

1. Zentrifugalextraktor von zwei fluiden Phasen, aufweisend einen zentralen Rotor (26), der sich um eine Drehachse (27) dreht und einen Behälter (28) beinhaltet, einen Stator (25), eine Dekantierkammer (36), die im Behälter des Rotors enthalten ist, und eine Emulgierkammer (32), wobei die Emulgierkammer (32) und die Dekantierkammer (36) miteinander in Verbindung stehen und die Emulgierkammer in Strömungsrichtung vor der Dekantierkammer angeordnet ist, wobei die Emulgierkammer und die Dekantierkammer aufeinanderfolgend auf der Drehachse des Rotors fluchtend angeordnet sind, wobei der Rotor ein Achsenstück (29) aufweist, welches die Emulgierkammer begrenzt, **dadurch gekennzeichnet, dass** die Emulgierkammer (32) zwischen dem Rotor und dem Stator eingeschlossen ist, wobei der Stator (25) und der Rotor (26) aus zusammenmontierten Abschnitten in trennbarer Weise aufgebaut sind, wobei der Rotor einen ersten der trennbaren Abschnitte (50), der eine Umfangswand der Dekantierkammer beinhaltet, und einen zweiten der trennbaren Abschnitte beinhaltet, der das Achsenstück (29) aufweist.

2. Extraktor nach Anspruch 1, **dadurch gekennzeichnet, dass** der zweite Abschnitt des Rotors einen Boden (57) des Behälters (28), der am ersten Abschnitt (50) montiert ist, und Speichen (66) aufweist, die den Boden (57) mit dem Achsenstück (29) verbinden.

3. Extraktor nach einem der Ansprüche 1 oder 2, **dadurch gekennzeichnet, dass** der Stator (29) zwei übereinander angeordnete Abschnitte (67, 68) aufweist, von denen einer mit einem Hohlraum für den Behälter versehen ist und ein anderer mit einem Hohlraum versehen ist, der eine Außenwand der Emulgierkammer (29) begrenzt.

4. Extraktor nach einem der Ansprüche 1 bis 3, **dadurch gekennzeichnet, dass** die Dekantierkammer einen größeren Radius als die Emulgierkammer hat.

5. Extraktor nach einem der Ansprüche 1 bis 4, **dadurch gekennzeichnet, dass** die Emulgierkammer mit Phaseneinbring- und Aufspeicherkanälen (30, 31) in Verbindung steht, die sich im Wesentlichen vertikal neben der Emulgierkammer erstrecken und über untere Enden zu einem unteren Ende der Emulgierkammmer führen.

6. Extraktor nach einem der Ansprüche 1 bis 5, **dadurch gekennzeichnet, dass** das Achsenstück des Rotors eine Radiuszunahme aufweist, zu einem sich in der Dekantierkammer erstreckenden Abschnitt (38), und zwar in Richtung zur Emulgierkammer hin, wobei der Abschnitt (38) einen Radius hat, der größer als ein Öffnungsradius eines Abschnittes (37) des Behälters (28) ist, durch den eine leichte fluide Phase aus der Dekantierkammer (36) abfließt.

7. Extraktor nach einem der Ansprüche 1 bis 6, **dadurch gekennzeichnet, dass** die Phasenzwischenkammern (39, 43), die sich in Strömungsrichtung hinter der Dekantierkammer befinden und durch ringförmige Überläufe (37, 44) begrenzt sind, miteinander in Verbindung stehen.

8. Extraktor nach einem der Ansprüche 1 bis 7, **dadurch gekennzeichnet, dass** sich das Achsenstück in die Dekantierkammer erstreckt und Schaufeln aufweist.

9. Extraktor nach einem der Ansprüche 1 bis 8, **dadurch gekennzeichnet, dass** er Phasensammelringe (40, 45) aufweist, die sich in Strömungsrichtung hinter der Dekantierkammer befinden und die einen zu den Austrittsöffnungen des Separators hin geneigten Boden aufweisen.

10. Extraktor nach einem der Ansprüche 1 bis 9, **dadurch gekennzeichnet, dass** der Behälter (28) einen herausnehmbaren Abschnitt (37) für ein Ablaufen einer leichten Phase aus der Dekantierkammer (36) aufweist.

11. Extraktor nach einem der Ansprüche 1 bis 10, **dadurch gekennzeichnet, dass** der Stator (25) eine ringförmige Lippe (69) aufweist, die dazu beiträgt, die Emulgierkammer (32) zu begrenzen und sich in den Behälter (28) erstreckt.
